# EUROPÄISCHE PATENTANMELDUNG

(11) **EP 1 160 151 A2**
(43) Veröffentlichungstag der Anmeldung: **05.12.2001**
(21) Anmeldenummer: 01110686.1
(22) Anmeldetag: 02.05.2001
(51) Int. Cl.: B62K 3/00, B62K 15/00

(54) **Roller mit einem Klappgelenk**

(30) Priorität: 31.05.2000 DE 10027075
(71) Anmelder: Hudora GmbH, 42897 Remscheid (DE)
(72) Erfinder: Grollius, Horst-Walter, Prof. Dr.-Ing., 50999 Köln (DE)
(74) Vertreter: Eder, Thomas, Dr.-Ing.

(57) **Zusammenfassung**

Die Erfindung betrifft einen Roller, insbesondere Roller mit nur einer Rolle als Vorderrad, mit einem zwischen einer Standfläche (1) und einer Lenksäule (7) angeordneten Klappgelenk (5) mit einem zusammengeklappten und einem fahrbereiten ausgeklappten Zustand, wobei das Klappgelenk (5) als ein Scharnier (9) mit einem wenigstens im fahrbereiten ausgeklappten Zustand fixier- und lösbaren Stützsteg (13, 13') ausgebildet ist, um das Scharnier (9) im fahrbereiten ausgeklappten Zustand drehfest zu fixieren.

## Beschreibung

Die Erfindung bezieht sich auf einen Roller mit einem Klappgelenk zwischen einer Standfläche und einer Lenksäule.

Derartige Roller weisen üblicherweise verschiedene Mechanismen auf, um in einem zusammengeklappten Zustand möglichst platzsparend transportiert und aufbewahrt zu werden. In ausgeklapptem Zustand sollen dagegen möglichst die Fahreigenschaften und Fahrstabilität von nicht klappbaren Rollern erreicht werden.

Hierzu sind im Handel verschiedene Modelle wie beispielsweise in der Beilage der Süddeutsche Zeitung Starnberger Ausgabe 11.4.2000 vom angeboten, erhältlich, die ein Klappgelenk in Form einer Zweipunktverbindung aufweisen. Hierbei ist die Standfläche an einem Punkt mit der Lenksäule drehbar gelagert verbunden. Die zweite Verbindung ist als ein in einer Kulisse über einen Hebel betätigbares geführtes Eingriffselement in Form eines Bolzens ausgebildet, welches im ausgeklappten fahrbereiten Zustand in eine Position der Kulisse einschnappt und mittels einer Schnellschraubverbindung fixiert werden kann. Eine derartige Verbindung weist zwar eine hohe Stabilität auf, ist aber nachteiligerweise aufgrund des hierfür nötigen Betätigens des Hebels und Anziehens bzw. Lösens der Schraubverbindung umständlich zu bedienen.

Der Erfindung liegt deshalb die Aufgabe zugrunde, einen Roller mit einem Klappgelenk zu schaffen, das bei einfacher Handhabung eine ausreichende Stabilität im fahrbereiten Zustand gewährleistet.

Diese Aufgabe wird erfindungsgemäß durch einen Roller mit den Merkmalen des Anspruchs 1 gelöst.

Durch die Ausbildung eines Klappgelenks als ein Scharnier, also eine drehbar gelagerte Verbindung zwischen Standfläche und Lenksäule des Rollers, welches durch einen fixier- und lösbaren Stützsteg zumindest in der fahrbereiten ausgeklappten Position fixiert und wieder gelöst werden kann, ist es auf einfache Art und Weise für eine Bedienperson möglich, eine stabile Fahrposition des Rollers herzustellen. Hierbei reicht es vorteilhafterweise aus, die Verbindungsstelle zwischen Stützsteg und Lenksäule oder die Verbindungsstelle zwischen Stützsteg und Standfläche zu lösen bzw. die Verbindung herzustellen, wie es beispielsweise mittels eines gefederten Bolzens in einer Halterung erfolgen kann.

Hierdurch ist vorteilhafterweise eine einfache Handhabung, nämlich das Betätigen nur eines einzigen Elements mit nur einer Hand oder gar einem Handgriff, gewährleistet, um den Roller in seiner fahrbereiten, ausgeklappten Stellung zu fixieren. Selbstverständlich ist es aber auch denkbar, beispielsweise aus Platzgründen für Transport und Aufbewahrung, insbesondere über längere Zeit, zu Reparaturzwecken oder Umbau durch Austausch gegen andere Stützstege, den Stützsteg an seinen beiden Verbindungsstellen zur Lenksäule und zur Standfläche von diesen zu lösen.

In einer Ausführungsform der Erfindung ist der Stützsteg an seinen Verbindungsstellen zur Lenksäule und zur Standfläche drehbar gelagert verbunden, wobei der Stützsteg selbst zweiteilig ausgebildet ist und seine beiden Teile mittels eines zumindest im fahrbereiten ausgeklappten Zustand fixierbaren Gelenks verbunden sind. Die Fixierung dieses Gelenks kann über verschiedene einfache Mittel, beispielsweise einen gefederten Bolzen, welcher in eine Halterung bzw.

Ausnehmung eingreift, erfolgen, so dass die Fixierung eines fahrbereiten ausgeklappten Zustands durch eine Bedienperson wiederum auf einfache Weise einhändig, insbesondere mit nur einem einzigen Handgriff, erfolgen kann.

Das Gelenk des zweiteiligen Stützsteges kann hierzu eine zweite Position aufweisen, in der das Fixiermittel, beispielsweise eine Rändelschraube oder der gefederte Bolzen, einschnappt, so dass hierdurch auch die zusammengeklappte Stellung des Rollers auf einfache Weise wie vorstehend für die ausgeklappte Stellung beschrieben, fixiert werden kann, wobei ein Überführen aus einer in die andere Stellung jeweils durch einen einzigen Handgriff möglich ist. Durch die Fixierung im zusammengeklappten Zustand können vorteilhafterweise Transportschäden aufgrund mechanischer Erschütterungen und gegeneinander schlagender Teile vermieden werden. Hierbei kann der zusammengeklappte Zustand vorteilhafterweise ohne ein Verletzungsrisiko, insbesondere Quetschen von Fingern, erreicht werden, da der Stützsteg (einteilig) entweder wegklappar ausgebildet ist oder sich (zweiteilig) auf einen Winkel von im Wesentlich 90° im zusammengeklappten Zustand einstellt. Auf diese Weise wird das Quetschen oder Einzwicken von Fingern im Bereich des Stützsteges und des nach oben in Richtung der Lenksäule gekrümmten Endbereiches der Standfläche verhindert.

In bevorzugter Ausführungsform der Erfindung weist das Klappgelenk ein Dämpfüngselement auf, um im fahrbereiten ausgeklappten Zustand und/oder im zusammengeklappten Zustand eventuell auftretende mechanische Erschütterungen zu dämpfen, Schäden zu vermeiden und insbesondere im fahrbereiten Zustand den Fahrkomfort durch Vermeidung harter Schläge zu erhöhen.

Hierbei kann das Dämpfüngselement im Prinzip an beliebiger drehbar gelagerter Stelle, also den Stellen und eventuell dem Gelenk im Stützsteg angeordnet sein, um dort auftretende Bewegungen zu dämpfen.

Im fahrbereiten Zustand können so minimale Drehbewegungen zwischen Lenksäule und Standfläche aufgrund geringer Toleranzen der Halterung bzw. der Aufnahme des Stützstegs und des Scharniers zwischen Standfläche und Lenksäule gedämpft an eine Bedienperson bzw. einen Fahrer weitergegeben werden, so dass Schläge durch Unebenheiten, Steine oder ähnliches auf der Fahrbahn an den Fahrer insbesondere über die Lenksäule und die Griffe stark gedämpft weitergegeben werden.

In der Transportposition, in der vorteilhafterweise die Standfläche möglichst nah an die Lenksäule, beispielsweise parallel, herangeführt und fixiert werden kann, verhindert ein solches Dämpfungselement vorteilhafterweise das eventuell mögliche Aneinanderschlagen verschiedener Teile des Rollers, so dass Transportschäden aufgrund mechanischer Erschütterungen vermieden werden können.

Weitere vorteilhafte Ausgestaltungen der Erfindung ergeben sich aus den abhängigen Ansprüchen.

Die Erfindung wird nachfolgend anhand der in der Zeichnung dargestellten Ausführungsbeispiele näher erläutert. In der Zeichnung zeigen:
- Fig. 1: eine Seitenansicht eines Rollers mit einem Klappgelenk nach der Erfindung;
- Fig. 2: eine vergrößerte Ansicht der Verbindungsstelle zwischen einer Standfläche und einer Lenksäule des Rollers nach Fig. 1 im ausgeklappten fahrbereiten Zustand;
- Fig. 3: eine Ansicht der Verbindungsstelle des Rollers nach Fig. 2 im zusammengeklappten Zustand;
- Fig. 4: eine Seitenansicht der Verbindungsstelle von Lenksäule und Standfläche einer weiteren Ausführungsform der Erfindung mit einem einteiligen Stützsteg im ausgeklappten fahrbereiten Zustand;
- Fig. 5: die Verbindungsstelle nach Fig. 4 im gelösten Zustand;
- Fig. 6: die Verbindungsstelle nach Fig. 4 und 5 im zusammengeklappten Zustand;
- Fig. 7: die Verbindungsstelle nach Fig. 6 im zusammengeklappten und fixierten Zustand;
- Fig. 8: eine weitere Alternative der Fixierung des Zustandes nach Fig. 7 und
- Fig. 9: eine vergrößerte Darstellung einer Einzelheit nach Fig. 8.

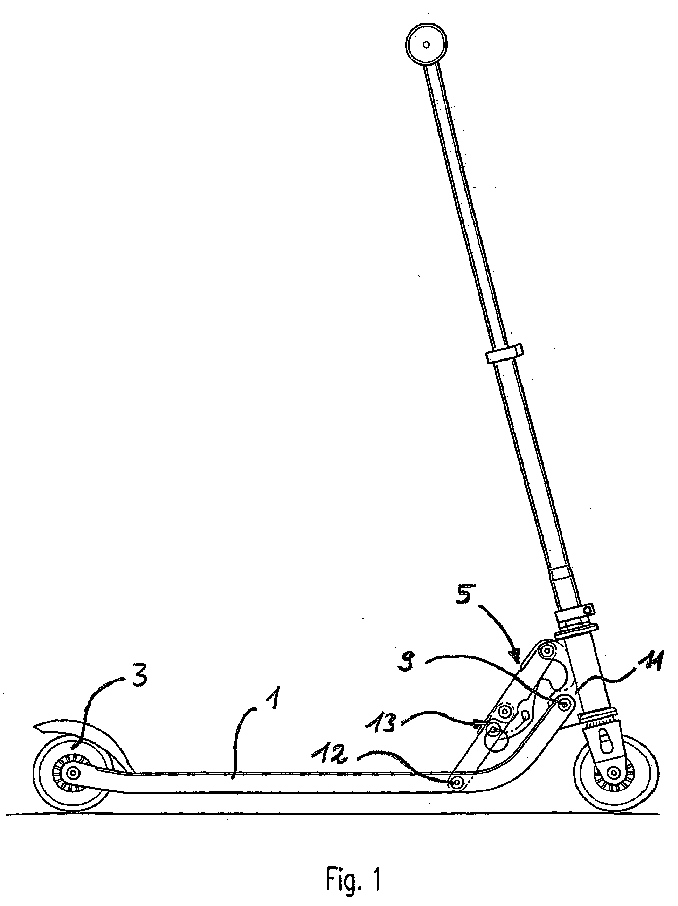

Der in Fig. 1 dargestellte Klapproller weist eine Standfläche 1 auf, an deren hinterem Ende ein Hinterrad 3 oder mehrere Hinterräder mittels einer Achse drehbar gelagert sind. An ihrem gegenüberliegenden Ende ist die Standfläche 1 mittels eines Klappgelenks 5 im Wesentlichen im unteren Bereich mit einer Lenksäule 7 bzw. deren Lagerung in der Zeichenebene ein- und ausklappbar verbunden.

Dieses Klappgelenk 5 umfasst zum Einen die drehbare Lagerung des vorderen Endes der Standfläche über eine Drehachse 9, welche in einem im unteren Bereich der Lenksäule 7 angeordneten Lager 11a einer Halterung 11 drehbar gelagert ist. Zum Anderen umfasst das Klappgelenk 5 einen Stützsteg 13, welcher mit seinem einen Ende im vorderen Bereich der Standfläche 1 und mit seinem anderen Ende oberhalb des Lagers 11a in einem Lager 11b der Halterung 11 für die Drehachse 9 jeweils drehbar gelagert ist.

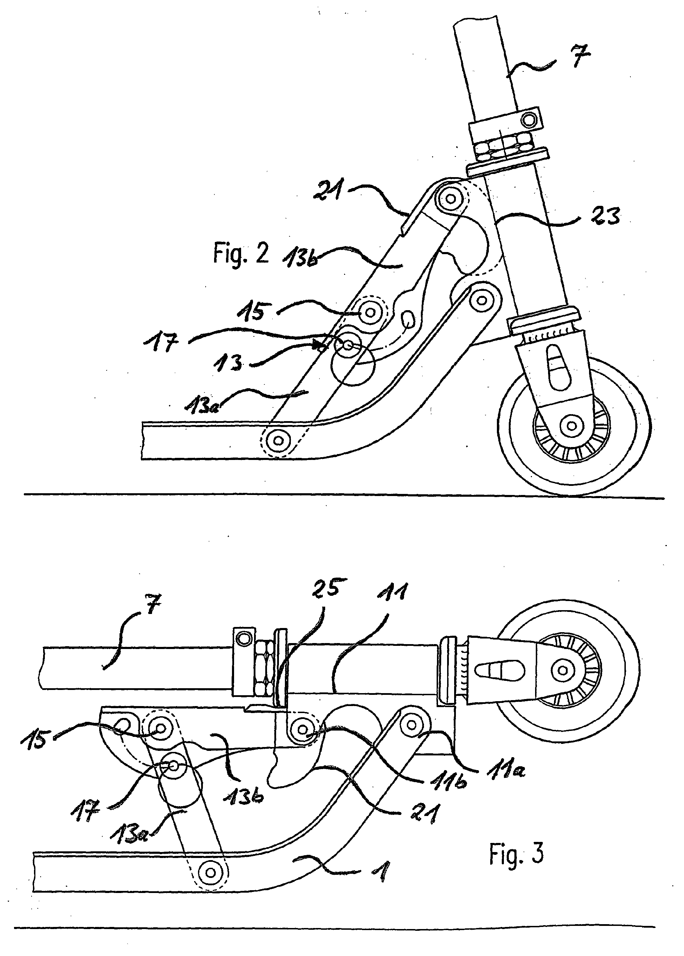

Dieser Stützsteg ist, wie in Fig. 2 ersichtlich, zweiteilig mit einem beispielsweise in seiner Mitte angeordneten Gelenk 15 zur drehbar gelagerten Verbindung der beiden Teile 13a, 13b ausgebildet. Im wie in Fig. 2 dargestellten ausgeklappten fahrbereiten Zustand des Rollers fluchten beide Teile 13a, 13b des Stützstegs 13 zueinander entlang einer Längsachse des gesamten Stützsteges 13, wobei diese Position über einen in einem Teil des Stützsteges 13a senkrecht zur Zeichenebene angeordneten gefederten Bolzen 17, welcher in eine Ausnehmung bzw. Bohrung im anderen Teil 13b des Stützsteges 13 in dieser Position eingreift, fixiert ist.

Hierbei kann die Entfernung zwischen dem Drehpunkt des Gelenks 15 und der Position des Bolzens 17 ein Sechstel bis beispielsweise ein Drittel der Gesamtlänge des Stützsteges 13 betragen, wobei ein größerer Abstand eine stabilere Verbindung gewährleistet und sich Toleranzen der Ausnehmung und des hierin eingreifenden Bolzens 17 mit größerem Abstand um so geringer auf Winkelbewegungen von der Standfläche 1 zur Lenksäule 7 auswirken.

Zudem sollen durch diesen klappbar augebildeten zweiteiligen Stützsteg 13 in einfacher Bauweise und Handhabung beide Maximalpositionen, also der in Fig. 2 dargestellte fahrbereite ausgeklappte Zustand und der in Fig. 3 dargestellte zusammengeklappte Zustand, ermöglicht werden, so dass zu große Abstände zwischen Bolzen und Gelenk aus diesem Grund ausscheiden.

Wie in Fig. 3 ersichtlich, kann der zweiteilige Stützsteg 13 in seinem abgewinkelten Zustand in der zusammengeklappten Position des Rollers fixiert werden, indem der Bolzen 17 in eine weitere in entsprechender Position angeordnete Ausnehmung eingreift. Hierdurch lässt sich eine optimale raumsparende Stellung der Standfläche 1 zur Lenksäule 7, beispielsweise im Wesentlichen parallel zu einander, erreichen. Der Stützsteg 13 kann hierbei beispielsweise bis zu 90° oder darüber hinaus abgewinkelt werden, wobei im Raum zwischen abgewinkelten Stützsteg 13 (im Wesentlichen 90°) und dem nach oben in Richtung der Lenksäule 7 gekrümmten Endbereich der Standfläche 1 bzw. der gegenüber der Standfläche 1 höher angeordneten Drehachse 9 keine Scherfunktion und ein dadurch bedingtes Verletzungsrisiko, insbesondere für Finger, entsteht.

Wie in Fig. 2 und Fig. 3 ersichtlich, ist an der Verbindungsstelle des Stützsteges 13 zur Lenksäule 7 bzw. Halterung 11 ein Dämpfüngselement 21 angeordnet, welches im ausgeklappten Zustand an seiner Berührungsfläche 23 an der Lenksäule unter Druck gequetscht anliegt und am Stützsteg 13 ortsfest und drehfest angeordnet ist. Hierdurch können im fahrbereiten Zustand Schläge durch Unebenheiten der Fahrbahn, welche aufgrund eventuell geringer Toleranzen zu Bewegungen der Lenksäule bzgl. der Standfläche 1 führen und an einen Fahrer insbesondere über die Lenksäule 7, die Griffe und Hände und Arme als Schläge weitergegeben werden, gedämpft werden und auf diese Weise den Fahrkomfort erhöhen.

In dem in Fig. 3 dargestellten zusammengeklappten Zustand wird das Dämpfungselement 21 an seiner Berührungsfläche 25 von diesem Bereich der Lenksäule 7 unter Druck gequetscht, so dass geringe Bewegungen der Lenksäule 7 zur Standfläche 1 auch in diesem zusammengeklappten Zustand gedämpft werden, um Transportschäden o.ä. aufgrund mechanischer Erschütterungen zu vermeiden. Hierbei kann, wie weiter oben stehend erwähnt, aus Platzgründen eine Stellung der Standfläche 1 parallel zur Lenksäule 7 oder eine über diese Stellung weiter geneigte Position erreicht werden.

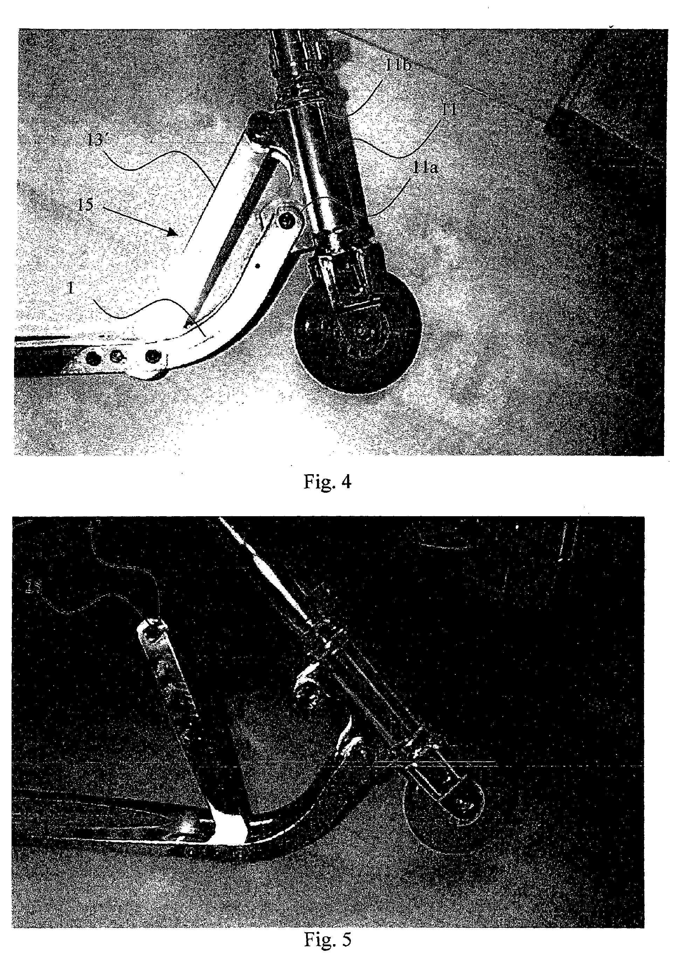

Wie in Fig. 4 bis 9 dargestellt, ist in einer weiteren Ausführungsform der Erfindung der Stützsteg als einteiliger Stützsteg 13' ausgebildet. Dieser einteilige Stützsteg 13' weist an seinen einander gegenüberliegenden Enden Verbindunggsstellen zur Längssäule 7 (über Lager 11a der Halterung 11) und zum vorderen Bereich der Standfläche 1 (über Drehachse 12) auf, wobei zumindest eine seiner beiden Verbindungsstellen lösbar und fixierbar ausgebildet ist. Im übrigen unterscheidet sich diese Ausführungsform nicht von der in Fig. 1 bis 3 dargestellten Ausführungsform, so dass, obwohl in den Zeichnungen nicht näher dargestellt, auch in dieser Ausführungsform ein Dämpfelement 21 vorgesehen sein kann.

Wie aus Fig. 4 ersichtlich, ist die Standfläche 1 in ihrem vorderen Bereich an der Halterung 11 im unteren Lager 11a drehbar gelagert und der Stützsteg 13' mit der Halterung 11 im oberen Lager 11b, ebenso wie der zweiteilige Stützsteg 13 der vorstehend beschriebenen Ausführungsform, verbunden.

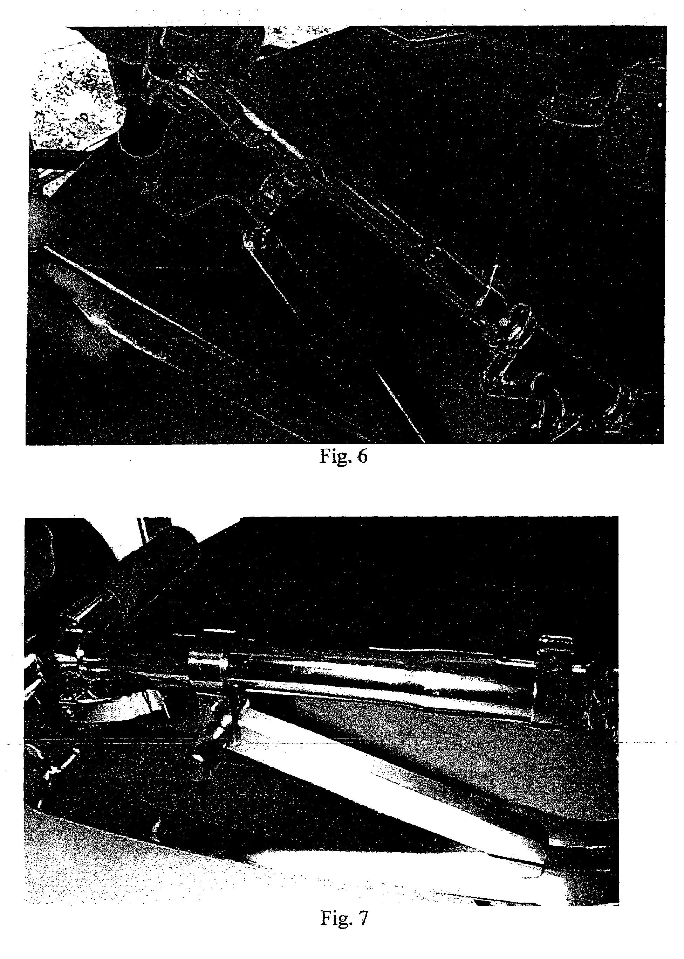

Diese Verbindung des Stützsteges 13' am Lager 11b der Halterung 11 kann, wie in Fig. 5 dargestellt, durch Eingreifen bzw. Lösen eines Eingreifmittels hergestellt bzw. gelöst werden. Als Eingreifmittel dient hierbei beispielweise ein gefederter Bolzen, welcher an der Halterung 11 an Lager 11b senkrecht zur Zeichenebene angeordnet ist, um eine in Richtung des Stützsteges 13' offene Ausnehmung zu durchdringen bzw. im zurückgezogenen Zustand freizugeben. Selbstverständlich ist es auch denkbar, statt eines in Schließrichtung gefederten Bolzens ein anderes Eingreifinittel, beispielsweise in Form einer Rändelschraube zu verwenden, die durch Einschrauben bzw. Herausschrauben die Funktion Stützsteg fixieren bzw. freigeben übernimmt. Diese Schraube kann an der Halterung 11 an Position 11b vorteilhafterweise derart angeordnet sein, so dass sich die Schraube nicht gänzlich aus der Halterung 11 herausdrehen lässt, um das Risiko des Verlierens dieser Schraube zu vermindern.

Im Fig. 4 dargestellten, ausgeklappten fahrbereiten Zustand des Rollers durchgreift das Eingreifmittel eine Bohrung am Ende des Stützsteges 13', so dass hierdurch eine feste Verbindung gewährleistet ist.

Wie in Fig. 5 ersichtlich, kann der Stützsteg 13' eine in der Zeichenebene der Fig. 4 liegende und in Richtung der Halterung 11 weisende Nut aufweisen, welche das Einrühren des Endes des Stützsteges 13' in die Halterung 11 bzw. Position 11b erleichtert und zudem beispielsweise durch entsprechende komplementäre Vorsprünge in der Ausnehmung 11b der Halterung 11 die Steifigkeit und Stabilität der in Fig. 4 dargestellten Verbindung erhöht.

Im oberen Bereich der Längssäule 7 weist diese Ausführungsform, wie in Fig. 6 und 7 dargestellt, eine weitere Halterung 29 auf, beispielsweise in Form einer Schelle, deren beide Enden Bohrungen aufweisen, in welcher ein Eingreifmittel wie ein gefederter Bolzen oder eine Schraube eingesetzt ist. Diese Halterung 29 entspricht somit dem oberen Halterungsteil 11b der Halterung 11, so dass nach dem Lösen des Stützsteges aus seiner Halterung 11b der Roller durch Zusammenklappen der Längssäule 7 zur Standfläche 1 über die Halterung 11a in einen in Fig. 7 zusammengeklappten und fixierten Zustand überführt werden kann. Hierbei kann dieser zusammengeklappte Zustand durch Fixierung des Endes des Stützsteges 13' in der Halterung 29 ebenso wie vorstehend für den fahrbereiten Zustand beschrieben, fixiert werden.

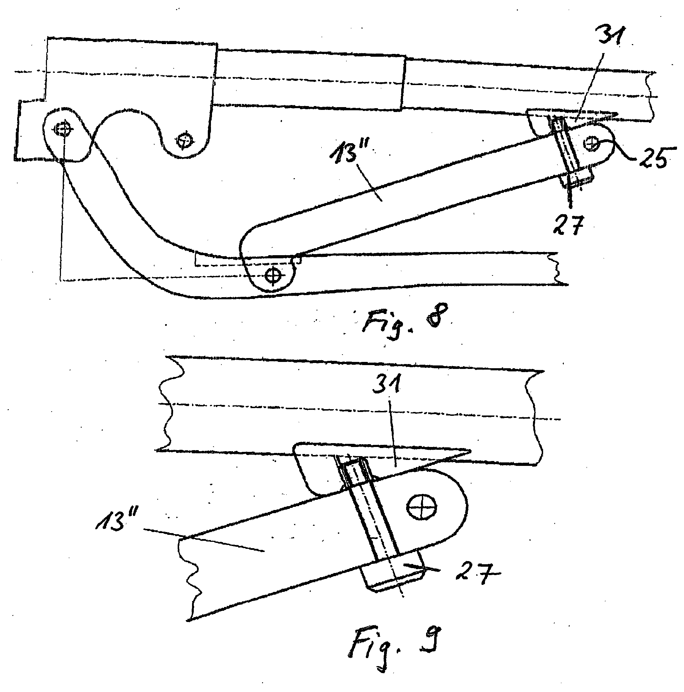

Die Fixierung im zusammengeklappten Zustand kann, wie in Fig. 8 als weitere Variante dargestellt, über eine in der Zeichenebene (Fig. 8) und senkrecht zur Ausnehmung 25 liegende Rändelschraube 27, welche in eine Halterung 31 im oberen Bereich der Längssäule einschraubbar ist, erreicht werden. Hierbei befindet sich am Ende der Rändelschraube ein Außengewinde, welches in ein Innengewinde der Halterung 31 einschraubbar ist, wobei die Gewindesteigung dieser Schraube ebenso wie aller, auch in anderen Ausführungsformen vorstehend beschriebener Schrauben möglichst hoch ist, um einen schnellen bzw. kurzen Schraubvorgang zu ermöglichen.

Die Rändelschraube weist in ihrem mittleren Bereich vorteilhafterweise einen geringen Außendurchmesser ohne Gewinde auf, so dass diese Schraube am Ende des Stützsteges 13" beispielsweise unterhalb der Bohrung 25 verliersicher drehbar angeordnet ist.

## Patentansprüche

1. Roller, insbesondere Roller mit nur einer Rolle als Vorderrad, mit einem zwischen einer Standfläche (1) und einer Lenksäule (7) angeordneten Klappgelenk (5) mit einem zusammengeklappten und einem fahrbereiten ausgeklappten Zustand,
**dadurch gekennzeichnet,**
**dass** das Klappgelenk (5) als ein Scharnier (9) mit einem wenigstens im fahrbereiten ausgeklappten Zustand fixier- und lösbaren Stützsteg (13, 13') ausgebildet ist, um das Scharnier (9)im fahrbereiten ausgeklappten Zustand drehfest zu fixieren.

2. Roller nach Anspruch 1, **dadurch gekennzeichnet, dass** das Klappgelenk (5) als ein Scharnier (9) mit einem im zusammengeklappten Zustand fixier-und lösbaren Stützsteg (13, 13') ausgebildet ist, um das Scharnier (9) im zusammengeklappten Zustand drehfest zu fixieren.

3. Roller nach Anspruch 1 oder 2, **dadurch gekennzeichnet, dass** der Stützsteg (13, 13') an der Lenksäule (7) und/oder an der Standfläche (1) lösbar und fixierbar anordenbar ist.

4. Roller nach einem der vorhergehenden Ansprüche, **dadurch gekennzeichnet, dass** der Stützsteg (13') einteilig und einstückig ausgebildet ist.

5. Roller nach einem der Ansprüche 1 bis 3, **dadurch gekennzeichnet, dass** der Stützsteg (13) zweiteilig ausgebildet ist.

6. Roller nach Anspruch 5, **dadurch gekennzeichnet, dass** der Stützsteg (13) ein drehfest fixierbares und lösbares Gelenk aufweist.

7. Roller nach einem der vorhergehenden Ansprüche, **dadurch gekennzeichnet, dass** das Klappgelenk (5) an seiner Verbindung zur Lenksäule (1) ein Dämpfüngselement (21) aufweist, um wenigstens im fahrbereiten ausgeklappten Zustand mechanische Erschütterungen zu dämpfen.

8. Roller nach Anspruch 7, **dadurch gekennzeichnet, dass** das Dämpfungselement (21) im zusammengeklappten Zustand mechanische Erschütterungen dämpft, um Transportschäden zu vermeiden.

9. Roller nach Anspruch 7 oder 8, **dadurch gekennzeichnet, dass** das Dämpfüngselement (21) an einer Verbindungsstelle des Stützstegs (13) zur Lenksäule (1) angeordnet ist.
